# EUROPEAN PATENT APPLICATION

(11) **EP 4 776 576 A1**
(43) Date of publication of application: **15.07.2026**
(21) Application number: 24946569.1
(22) Date of filing: 04.11.2024
(51) Int. Cl.: H04L 12/10, H02M 1/36

(54) **POWER SOURCING EQUIPMENT, BUCK CONTROL CIRCUIT AND CONTROL METHOD THEREFOR**

(71) Applicant: Delta Electronics Inc., Taoyuan City 320023 (TW)
(72) Inventor: TU, Kuan-hsien, Taoyuan City 320023 (TW); LEE, Cheng-chieh, Taoyuan City 320023 (TW); LIU, Cheng-en, Taoyuan City 320023 (TW); LIN, Hsuan-chen, Taoyuan City 320023 (TW)
(74) Representative: 2K Patent Partnerschaft mbB
(86) International application number: PCT/CN2024/129645
(87) International publication number: WO 2026/091135

(57) **Abstract**

An Ethernet power source equipment (PSE) is coupled to a load device (200), and the Ethernet PSE includes a power supply device (1), an output control circuit (4), a path control circuit (20), and a control module (22). When the output control circuit (4) detects that the load device (200) is not coupled to an output terminal (100-3) of the Ethernet PSE, the path control circuit (20) disconnects a power supplying path (Lp) between the output terminal (100-3) to the control module (22), and the output control circuit (4) adjusts an output voltage (Vo) to a first voltage (Vo1) so that the control module (22) enters a disabled state. When the output control circuit (4) detects that the load device (200) is coupled to the output terminal (100-3), the path control circuit (20) short-circuits the power supplying path (Lp), and the output control circuit (4) adjusts the output voltage (Vo) to a second voltage (Vo2) so that the control module (22) enters an enabled state.

## Description

### BACKGROUND

### Technical Field

The present disclosure relates to an Ethernet power source equipment, a control circuit, and a method of controlling the same, and more particularly to an Ethernet power source equipment with power saving function, a step-down control circuit, and a method of controlling the same.

### Description of Related Art

The statements in this section merely provide background information related to the present disclosure and do not necessarily constitute prior art.

Power over Ethernet (PoE) is a variety of standardized technologies or its own standard technologies that can transmit power and data to devices through twisted pairs in an Ethernet network. This technology mainly uses an Ethernet power source equipment (PSE) to couple to a powered device (PD) through at least one RJ45 network cable to simultaneously transmit power and data to the powered device. Therefore, this technology can be used without additional power sockets so that Ethernet PSE does not require additional power sockets, thereby saving the time and cost of configuring power wires.

However, most of the products currently on the market rely on full-time signal communication between the Ethernet PSE and the powered device (PD) to determine whether the PSE should supply power to the correct PD. Therefore, even when the PD is not connected or the PD has been disconnected, the PSE will continue to send handshake signals for detection so that power will continue to be lost when the PSE is in standby, and therefore the current PSE cannot meet the current energy efficiency regulations (such as but not limited to DoE, EC CoC, and other energy regulations) for power consumption under no load conditions.

Therefore, how to design an Ethernet PSE to reduce the power consumption of the Ethernet PSE as much as possible when the powered device is not connected to the Ethernet PSE has become a critical topic in this field.

### SUMMARY

In order to solve the above-mentioned problems, the present disclosure provides an Ethernet power source equipment (PSE). The Ethernet PSE couples to a load device, and the Ethernet PSE includes a power supply device, an output control circuit, a path control circuit, and a control module. The power supply device converts an input voltage into an output voltage, and provides the output voltage to the load device through an output terminal. The output control circuit is coupled to the output terminal, and adjusts the output voltage to a first voltage or a second voltage based on whether the load device is coupled to the output terminal. The path control circuit is coupled to the output terminal. The control module is coupled to the path control circuit. When the output control circuit detects that the load device is not coupled to the output terminal, the path control circuit disconnects a power supplying path between the output terminal and the control module, and the output control circuit adjusts the output voltage to the first voltage so that the control module enters a disabled state. When the output control circuit detects that the load device is coupled to the output terminal, the path control circuit connects the power supplying path, and the output control circuit adjusts the output voltage to the second voltage so that the control module enters an enabled state.

In order to solve the above-mentioned problems, the present disclosure provides a step-down control circuit. The step-down control circuit is applied to an Ethernet power source equipment (PSE), and the Ethernet PSE includes a power supply device for providing an output voltage through a first end and a second end. The power supply device includes a feedback control circuit, and the feedback control circuit includes a clamping component coupled to the second end of the power supply device in series, a feedback circuit, and a voltage regulating circuit, and a first voltage dividing circuit coupled to the second end and the voltage regulating circuit. The step-down control circuit includes a second voltage dividing circuit and an impedance control circuit. The second voltage dividing circuit is coupled to the first voltage dividing circuit in series. The impedance control circuit is coupled to the second voltage dividing circuit in parallel and coupled to the first end, and the impedance control circuit selectively bypasses the second voltage dividing circuit to provide a first impedance or a second impedance to the voltage regulating circuit. The bypass circuit is coupled to the first end and coupled to the clamping component in parallel. A power pin of a controller of the Ethernet PSE is coupled to the impedance control circuit and the bypass circuit; when a potential of the first end is in a first potential, and a power supplying path between the second end and the power pin is disconnected to provide a first path voltage to the impedance control circuit, the impedance control circuit does not bypass the second voltage dividing circuit to provide the first impedance to the voltage regulating circuit, and the bypass circuit bypasses the clamping component so that the feedback circuit notifies the power supply device to step down the output voltage to a first voltage according to the first impedance.

In order to solve the above-mentioned problems, the present disclosure provides a method of controlling an Ethernet power source equipment (PSE), the Ethernet PSE receives an input voltage and couples to a load device. The Ethernet PSE includes a power supply device and a control module. The method includes steps of: converting, by the power supply device, the input voltage into an output voltage, and providing the output voltage to the load device through an output terminal; disconnecting a power supplying path between the output terminal and the control module to disable the control module when the Ethernet power source equipment detects that the load device is not coupled to the power supply device; adjusting the output voltage to a first voltage according to that the load device not being coupled to the power supply device; connecting the power supplying path to enable the control module when the Ethernet power source equipment detects that the load device is coupled to the power supply device; adjusting the output voltage to a second voltage according to that the load device being coupled to the power supply device.

The main purpose and effect of the present disclosure are to: when the load device is not coupled to the output terminal of the Ethernet PSE, the output control circuit controls the power supply device to adjust the output voltage to the first voltage to enter a step-down power saving mode to reduce the output voltage, which makes the Ethernet controller enter the disabled state. Therefore, it can significantly reduce the power consumption of the Ethernet PSE when the load device is not coupled to the power supply device.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1 is a block circuit diagram of an Ethernet power source equipment with power saving function according to the present disclosure.
FIG. 2 is a detailed block circuit diagram of the Ethernet power source equipment with power saving function according to the present disclosure.
FIG. 3A is a block circuit diagram of a path control circuit and a control module according to a first embodiment of the present disclosure.
FIG. 3B is a block circuit diagram of the path control circuit and the control module according to a first embodiment of the present disclosure.
FIG. 4 is a block circuit diagram of an output control circuit according to the present disclosure.
FIG. 5 is a detailed block circuit diagram of the output control circuit according to the present disclosure.
FIG. 6 is a circuit diagram of the output control circuit according to the present disclosure.
FIG. 7 is a flowchart of a method of controlling the Ethernet power source equipment according to the present disclosure.
FIG. 8 is a timing diagram of the method of controlling the Ethernet power source equipment according to the present disclosure.

### DETAILED DESCRIPTION

Reference will now be made to the drawing figures to describe the present disclosure in detail. It will be understood that the drawing figures and exemplified embodiments of present disclosure are not limited to the details thereof.

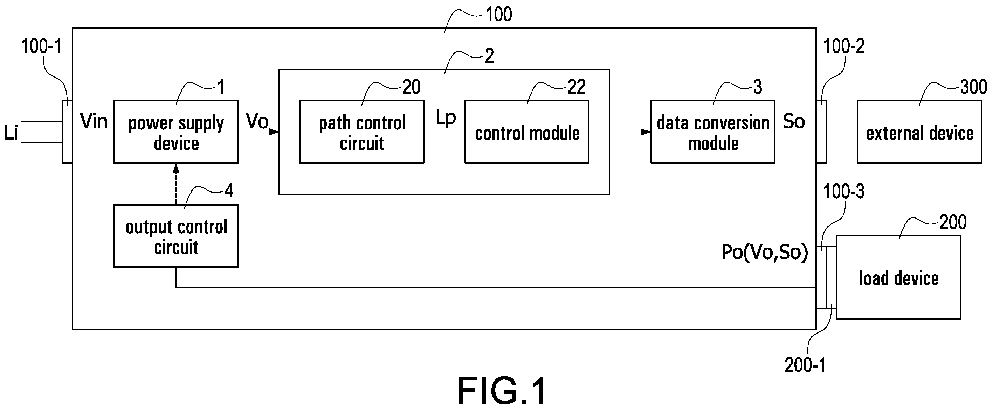

Please refer to FIG. 1, which shows a block circuit diagram of an Ethernet power source equipment (PSE) with power saving function according to the present disclosure. The Ethernet power source equipment (hereinafter abbreviated as "Ethernet PSE") 100 is used to couple to a load device (also referring to a powered device, PD) 200, and the Ethernet PSE 100 includes a power supply device 1, a control circuit 2, a data conversion module 3, and an output control circuit 4. The control circuit 2 is coupled to the power supply device 1 and the data conversion module 3, and the power supply device 1 is coupled a power line Li through a first port 100-1 to receive an input voltage Vin. The power supply device 1 is used to convert the input voltage Vin into an output voltage Vo. In particular, the output voltage Vo may be, for example, but not limited to, 20V to 55V, based on the specifications of the Ethernet PSE 100. The data conversion module 3 is coupled to an external device 300 (for example, but not limited to, web cameras, central servers) through a second port 100-2 to receive an external signal So provided by the external device 300 and receive the output voltage Vo provided by the power supply device 1 and control signals provided by the control circuit 2.

Furthermore, the control circuit 2 includes a path control circuit 20 and a control module 22. The control module 22 internally includes a PSE controller. The path control circuit 20 is coupled to the control module 22 and a third port (i.e., an output terminal 100-3), such as an RJ45 connector. The path control circuit 20 is used to disconnect a power supplying path Lp between the output terminal 100-3 and the control module 22 according to that the load device 200 is not coupled to the output terminal 100-3, and to connect (short-circuit) the power supplying path Lp between the output terminal 100-3 and the control module 22 according to that the load device 200 is coupled to the output terminal 100-3. In particular, the power supplying path Lp may be, for example but not limited to, the two ends of a switch. The path control circuit 20 can short-circuit and disconnect the power supplying path Lp by controlling the switch to be turned on and turned off, but is not limited to this, that is, it can be implemented in many ways, such as but not limited to, optical coupler, mechanical braking, etc. The control module 22 is coupled to the path control circuit 20, and when the control module 22 receives sufficient power supply and enters the enabled state, the control module can communicate with the load device 200 through a handshake signal (which has multiple communication manners, and therefore it is shown with a dotted line) to confirm whether the load device 200 is a valid load.

Furthermore, the Ethernet PSE 100 may optionally include a data conversion module 3 to convert signals output by the Ethernet PSE 100 into a signal format suitable for communication with the load device 200. However, if the load device 200 does not have this requirement, the data conversion module 3 may be omitted. Specifically, the data conversion module 3 is coupled to the output terminal 100-3 to couple to the load device 200 through the output terminal 100-3. The data conversion module 3 is used to integrate the output voltage Vo, the control signals provided by the control circuit 2, and the external signal So into an integrated output power Po (involving voltages, currents, and signals), and the integrated output power Po is provided to a device port 200-1 of the load device 200 through the output terminal 100-3. In particular, the data conversion module 3 may include a conversion unit (not shown) for converting signals and voltages. In addition to integrating the output voltage Vo, the control signal provided by the control circuit 2, and the external signal So into the integrated output power Po, the conversion units can also be used to convert voltages or signals into a voltage or signal that meets the requirements of the load device 200.

The output control circuit 4 is coupled to the output terminal 100-3 and the power supply device 1, and adjusts the output voltage Vo based on whether the load device 200 is coupled to the output terminal 100-3. Specifically, the main purpose and effect of the disclosure is that in addition to detecting whether the load device 200 is connected to determine whether to operate the Ethernet controller (PSE controller) inside the control circuit 2, the Ethernet PSE 100 also determines whether to enter a step-down mode. When the load device 200 is not coupled to the output terminal 100-3 of the Ethernet PSE 100, that is, the load device 200 is not coupled to the power supply device 1 through the RJ45 connector, the output control circuit 4 controls the power supply device 1 to adjust the output voltage Vo into a first voltage Vo1 (for example, but not limited to, less than or equal to 20V), and therefore the Ethernet PSE 100 enters a step-down power saving mode to reduce the output voltage Vo, which makes the Ethernet controller enter the disabled state. On the contrary, when the load device 200 is coupled to the output terminal 100-3 of the Ethernet PSE 100, that is, the load device 200 is coupled to the power supply device 1 through the RJ45 connector, the output control circuit 4 controls the power supply device 1 to adjust the output voltage Vo into a second voltage Vo2 (for example, but not limited to, greater than or equal to 55V) to cancel the step-down power saving mode and enable the Ethernet controller to enter the enabled state. After the Ethernet controller enters the enabled state, the Ethernet controller can communicate with the load device 200 through a handshake signal to confirm whether the load device 200 is a valid load.

When the Ethernet controller confirms that the load device 200 is a valid load through the handshake signal, the power supply device 1 supplies the power required by the load device 200 (for example, but not limited to, 0.44W to 3.84W, 3.84W to 6.49W, 36W, etc., based on the requirements of the load device 200). On the contrary, if the load device 200 is not a valid load, it means that the load device 200 does not comply with the specific specification of Power over Ethernet (such as, but not limited to, the Power over Ethernet specification of IEEE802.3). Therefore, the power supply device 1 can supply default power (for example, but not limited to, 0.44W to 12.95W) to the load device 200. In particular, the above-mentioned step-down power saving mode means that when the load device 200 is not connected, the Ethernet controller will automatically enter the disabled mode since it cannot receive power, thereby causing it to be unable to operate without consuming power. Therefore, the Ethernet PSE 100 only consumes original power on the power supply device 1. Moreover, since the output voltage Vo of the power supply device 1 is also stepped down to the first voltage Vo1, the power consumption of the Ethernet PSE 100 can be reduced, thereby making it easier to comply with energy efficiency regulations (such as, but not limited to, DoE, EC CoC, MEPS, Tier, and etc.) for power consumption under no load conditions.

For example, taking the EC CoC v5 Tier 2 regulation of 36W as an example, the loss of the Ethernet PSE 100 under no load is limited to less than or equal to 75mW. It is assumed that the loss of the Ethernet PSE 100 when no load is 65mW, and the loss of the control circuit 2 including the Ethernet controller when operating is 200mW. When the Ethernet PSE 100 without the power saving function is under no load, the loss is equal to 265mW (i.e., 65mW+200mW), and therefore it is not less than or equal to 75mW and does not comply with the energy regulations. When the Ethernet PSE 100 with the power-saving function of the present disclosure is not coupled to the load device 200, since the Ethernet controller enters the disabled state without consuming power, and the output voltage Vo is stepped down to the first voltage Vo1, the loss at no load is only 65mW at most (the loss is expected to be even lower after the output voltage Vo is stepped down) and complies with energy regulations.

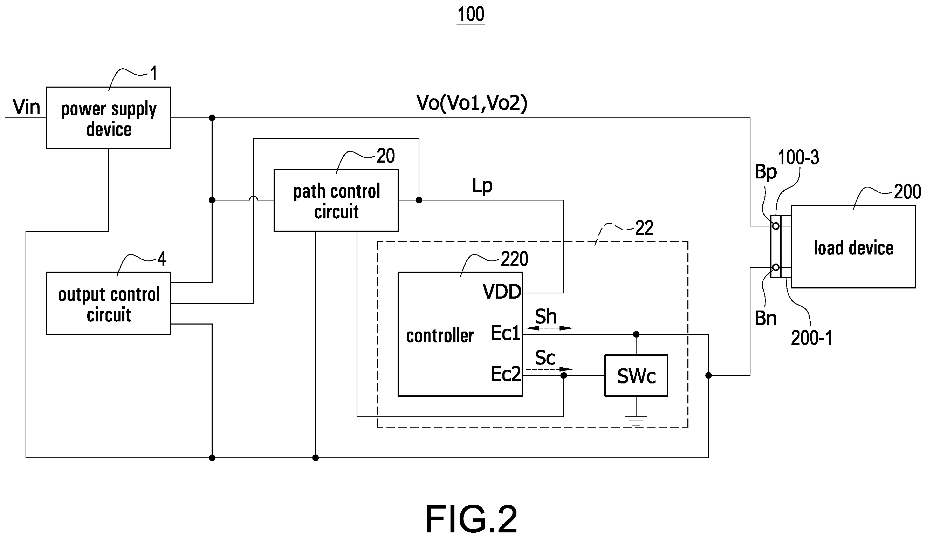

Please refer to FIG. 2, which shows a detailed block circuit diagram of the Ethernet power source equipment with power saving function according to the present disclosure, and also refer to FIG. 1. In FIG. 2, the detailed block circuit diagram of the power supply device 1, the control circuit 2, and the output control circuit 4 is mainly shown, and the coupling relationship between these devices and circuits is further disclosed. Specifically, the output terminal 100-3 includes a negative bus end (hereinafter abbreviated as "first end Bn") and a positive bus end (hereinafter abbreviated as "second end Bp"). The power supply device 1 provides the output voltage Vo to the load device 200 through the first end Bn and the second end Bp. The path control circuit 20 is coupled to the first end Bn, the second end Bp, and the control module 22, and the control module 22 is coupled to the first end Bn. In particular, the power supply device 1 may be an AC-to-DC converter or a DC-to-DC converter, and is preferably a converter with an isolation transformer (for example, but not limited to, flyback, LLC, etc. converters).

The path control circuit 20 can realize whether the load device 200 is coupled to the output terminal 100-3 based on a voltage change at the first end Bn. When the path control circuit 20 realizes that the load device 200 is not coupled to the output terminal 100-3 according to the voltage change at the first end Bn, the path control circuit 20 disconnects the power supplying path Lp so that the output voltage Vo cannot be provided to the control module 22 through the second end Bp and the power supplying path Lp. Therefore, the control module 22 cannot receive power required for operation and enters a disabled state. On the contrary, when the path control circuit 20 realizes that the load device 200 is coupled to the output terminal 100-3 according to the voltage change at the first end Bn, the path control circuit 20 connects the power supplying path Lp so that the output voltage Vo can be provided to the control module 22 through the second end Bp and the power supplying path Lp. Therefore, the control module 22 can receive power required for operation and enters an enabled state.

Furthermore, the control module 22 includes a PSE controller (hereinafter abbreviated as "controller 220") and a communication module (for example, but not limited to, a switch SWc may be used to form). The controller 220 includes a power pin VDD, a first pin Ec1, and a second pin Ec2. The power pin VDD is coupled to the path control circuit 20 to receive the power required for operation through the power supplying path Lp and enter the enabled state. A first end of the switch SWc is coupled to the first pin Ec1 and the first end Bn, a second end of the switch SWc is grounded, and a control end of the switch SWc is coupled to the second pin Ec2.

When the load device 200 is not coupled to the power supply device 1, the path control circuit 20 disconnects the coupling relationship between the power supply device 1 and the second end Bp so that the controller 220 of the control circuit 2 is powered off and enters the disabled state. In this condition, the potential of the first end Bn is in the first potential (for example, but not limited to, a low potential), and the controller 220 cannot control the switch SWc so that the switch is turned off. When the load device 200 is coupled to the power supply device 1, the power supply device 1 and the load device 200 will generate a transient loop from the power supply device 1, the second end Bp, the load device 200 to the first end Bn so that the voltage at the first end Bn corresponds to the voltage at the second end Bp to be the second potential (for example, but not limited to, a high potential). Therefore, the path control circuit 20 short-circuits the power supplying path Lp according to the potential of the second end Bp so that the output voltage Vo can be provided to the controller 220 through the power supplying path Lp, and the controller 220 can receive the power required for operation through the power pin VDD and enter the enabled state.

After the controller 220 enters the enabled state, the controller 220 provides a handshake signal Sh to the first end Bn through the first pin Ec1 to communicate with the load device 200 through the handshake signal Sh. After the handshaking communication between the controller 220 and the load device 200 is completed, the controller 220 ends providing the handshake signal Sh, and provides a control signal Sc to turn on the switch SWc through the second pin Ec2 so as to connect the first end Bn to be grounded. In particular, after the communication between the controller 220 and the load device 200 is completed, when the controller 220 confirms that the load device 200 is a valid load, the power supply device 1 supplies the required power to the load device 200. On the contrary, when the controller 220 confirms that the load device 200 is an invalid load, the power supply device 1 supplies the default power to the load device 200.

When the load device 200 is disconnected from the power supply device 1, the voltage at the first end Bn will change to a second potential, for example, but not limited to, a high potential, but it may also be a low potential, which may be determined according to the actual design of the circuit. The controller 220 changes the level of the control signal Sc through the second pin Ec2 according to the voltage change of the first end Bn and controls the switch SWc to be turned off so as to restore the first end Bn to the state in which the load device 200 is not yet been connected. Furthermore, the path control circuit 20 also disconnects the power supplying path Lp according to the level change of the control signal Sc so as to power off the controller 220 and enter the disabled state.

In one embodiment, the controller 220 may also be a function without a handshaking mechanism. If the controller 220 does not have the function of the handshake mechanism, the first pin Ec1 may be a detection pin for detecting specific parameters of the load device 200, and determines whether the load device 200 is the valid load according to the detection result. The function without the handshaking mechanism may be equivalently deduced from the above disclosure, and will not be described again here.

On the other hand, the output control circuit 4 is coupled to the first end Bn, the second end Bp, and the path control circuit 20. When the load device 200 is not coupled to the power supply device 1, the output control circuit 4 does not receive the signal provided by the first end Bn or the path control circuit 20. Therefore, the output control circuit 4 adjusts the output voltage Vo to the first voltage Vo1 to reduce the power consumption of the Ethernet PSE 100. When the load device 200 is coupled to the power supply device 1, since the voltage at the first end Bn corresponds to the voltage at the second end Bp to be the second potential, the output control circuit 4 adjusts the output voltage Vo from the first voltage Vo1 to the second voltage Vo2 according to the second potential of the first end Bn. In this condition, the path control circuit 20 also connects the power supplying path Lp so that the output voltage Vo can be provided to the controller 220 through the power supplying path Lp, and the controller 220 can receive the power required for operation through the power pin VDD and enter the enabled state.

After the handshaking communication between the controller 220 and the load device 200 is completed, the first end Bn is grounded, and the power supplying path Lp is still short-circuited. Therefore, the output control circuit 4 continues to maintain the output voltage Vo at the second voltage Vo2 according to the short circuit of the power supplying path Lp. When the load device 200 is disconnected from the power supply device 1, the first end Bn returns to the state in which the load device 200 is not yet connected, and the power supplying path Lp is also disconnected due to the level change of the control signal Sc. Therefore, the output control circuit 4 adjusts the output voltage Vo from the second voltage Vo2 to the first voltage Vo1 to restore the power saving state. In one embodiment, the output control circuit 4 can adjust the output voltage Vo by controlling the power supply device 1 (for example, but not limited to, adjusting the feedback signal of the power supply device 1), or can directly adjust the voltage at the output terminal 100-3 (for example, dividing it, etc.), which is not limited here.

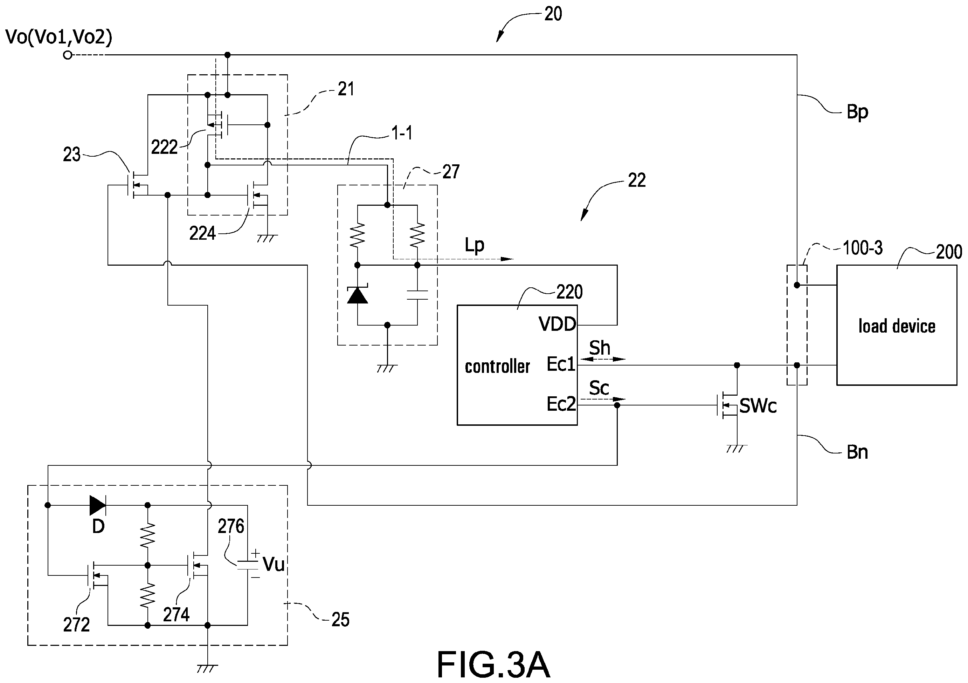

Please refer to FIG. 3A, which shows a block circuit diagram of a path control circuit and a control module according to a first embodiment of the present disclosure, and also refer to FIG. 1 to FIG. 2. In FIG. 3A, the path control circuit 20 includes a switch circuit 21, a trigger component 23, an unlocking circuit 25, and an energy storing circuit 27. A first end of the switch circuit 21 is coupled to the second end Bp, and a second end of the switch circuit 21 is coupled to the power pin VDD through the energy storing circuit 27. The trigger component 23 is coupled to the first end Bn and the switch circuit 21, and the unlocking circuit 25 is coupled to the second pin Ec2, the switch circuit 21, and the trigger component 23. When the load device 200 is not coupled to the power supply device 1, the trigger component 23 and the unlocking circuit 25 disconnect the power supplying path Lp between the first end Bn, the switch circuit 21, the energy storing circuit 27, and the power pin VDD so that the controller 220 is powered off and enters the disabled state. When the load device 200 is coupled to the power supply device 1, the power supply device 1 and the load device 200 will generate a transient loop between the second end Bp, the load device 200, and the first end Bn so that the potential of the first end Bn rises from the first potential to the second potential. According to the transient state when the load device 200 is connected, the potential of the first end Bn rises to trigger the switch circuit 21 to provide the function of latching connect (short-circuiting) the power supplying path Lp to short-circuit the power supplying path LP (indicated by a dotted line). After the controller 220 is powered on and enters the enabled state, the controller 220 provides a handshake signal Sh through the first pin Ec1 to communicate with the load device 200 to determine whether the load device 200 is a valid load.

When the controller 220 successfully communicates with the load device 200 through the handshake signal Sh and determines that the load device 200 is a valid load, the controller 220 ends providing the handshake signal Sh, and provides a control signal Sc through the second pin Ec2 to control the switch SWc to be turned on so as to connect the first end Bn to the ground and change its potential to the first potential. In particular, the unlocking circuit 25 establishes the unlocking voltage Vu according to the control signal Sc. When the first end Bn is grounded, the output voltage Vo can be provided to the load device 200 through the first end Bn and the second end Bp to supply the power required by the load device 200. When the controller 220 determines that the load device 200 is not a valid load, its control manner is similar to this and will not be described again. Since the trigger component 23 triggers the switch circuit 21 to provide the function of latching connect (short-circuiting) the power supplying path Lp, the switch circuit 21 is latched, and therefore even if the state of the trigger component 23 changes, the power supplying path Lp remains short-circuited.

When the load device 200 is disconnected from the power supply device 1, the potential of the first end Bn changes from the first potential to the transient second potential. The controller 220 changes the level of the control signal Sc according to the potential change of the first end Bn to turn off the switch SWc so that the first end Bn is restored to the state in which the load device 200 is not yet connected. During this process, the trigger component 23 still cannot trigger the switch circuit 21 to change the state, and the unlocking circuit 25 provides the unlocking voltage Vu to the switch circuit 21 according to the level change of the control signal Sc so that the switch circuit 21 provides an unlocking function of disconnecting the power supplying path Lp according to the unlocking voltage Vu.

On the other hand, the circuit structure shown in FIG. 3A is only a schematic example, which is mainly used to form a circuit with the same operation logic in accordance with the above-mentioned operation methods, but is not limited to this. Therefore, as long as circuits, controllers, and other devices that can implement the above-mentioned operation methods, they should be included in the scope of the embodiment. Moreover, in FIG. 3A, the trigger component 23 may be a trigger switch. A first end of the trigger component 23 is coupled to the second end Bp, a second end of the trigger component 23 is coupled to the switch circuit 21 and the unlocking circuit 25, and a control end of the trigger component 23 is coupled to the first end Bn. The trigger component 23 is turned on when the potential of the first end Bn rises from the first potential to the second potential to trigger the switch circuit 21 to provide the function of latching connect (short-circuiting) the power supplying path Lp. When the trigger component 23 triggers the switch circuit 21 to provide the function of latching connect (short-circuiting) the power supplying path Lp, no matter whether the trigger component 23 is turned on or turned off (that is, before the load device 200 is removed/disconnected), the switch circuit 21 cannot be triggered again.

The switch circuit 21 may be, for example, but not limited to, a bi-crystal latch circuit, and the bi-crystal latch circuit mainly includes a path switch 222 and a driving switch 224. A first end of the path switch 222 is coupled to the second end Bn, and a second end of the path switch 222 is coupled to the energy storing circuit 27. A first end of the driving switch 224 is coupled to a control end of the path switch 222, and a control end of the driving switch 224 is coupled to the trigger component 23 and the unlocking circuit 25. The driving switch 224 is used to latch on the path switch 222 or unlock off the path switch 222 according to the potential of the first end Bn and the level of the control signal Sc so as to control whether the energy storing circuit 27 is electrically coupled to the second end Bp. When the trigger component 23 is turned on according to the potential of the first end Bn rising from the first potential to the second potential, the driving switch 224 is turned on according to the turned-on the trigger component 23 to latch on the path switch 222 so that the energy storing circuit 27 is electrically coupled to the second end Bp. When the unlocking circuit 25 receives, for example, but not limited to, the control signal Sc with a low level, the unlocking circuit 25 pulls low the potential of the control end of the driving switch 224 through the unlocking voltage Vu so as to unlock off the path switch 222 by turning off the driving switch 224.

The unlocking circuit 25 includes a first unlocking switch 272, a second unlocking switch 274, and an energy storing component 276. A control end of the first unlocking switch 272 is coupled to the second pin Ec2. A first end of the second unlocking switch 274 is coupled to the trigger component 23 and the switch circuit 21, and a control end of the second unlocking switch 274 is coupled to a first end of the first unlocking switch 272. The energy storing component 276 may be, for example, but not limited to, a capacitor or other components with an energy storage function, and the energy storing component 276 is coupled to the second pin Ec2 and the control end of the second unlocking switch 274. When the controller 220 completes communication with the load device 200 and provides, for example, but not limited to, the control signal Sc with the high level, the first unlocking switch 272 is turned on according to the control signal Sc so that the control signal Sc is turned on through the first unlocking switch 272 to charge the energy storing component 276 to establish the unlocking voltage Vu in the energy storing component 276. When the controller 220 provides, for example, but is not limited to, the control signal Sc with the low level according to the disconnection of the load device 200, the first unlocking switch 272 is turned off according to the control signal Sc. In this condition, the unlocking voltage Vu is provided to the control end of the second unlocking switch 274 so that the second unlocking switch 274 is turned on according to the unlocking voltage Vu. When the second unlocking switch 274 is turned on, the second unlocking switch 274 pulls low the potential of the control end of the driving switch 224 to turn off the driving switch 224 by turning on the second unlocking switch 274, thereby unlocking off the path switch 222.

In particular, the unlocking circuit 25 includes a diode D having an anode and a cathode. The anode of the diode D is coupled to the second pin Ec2 and the control end of the first unlocking switch 272; the cathode of the diode D is coupled to the control end of the second unlocking switch 274. The diode D is used to prevent the unlocking voltage Vu from generating power flowing to a path other than the control end of the second unlocking switch 274 when the unlocking voltage Vu is released so as to avoid the risk of failure of the unlocking circuit 25. In one embodiment, in addition to using a circuit composed of transistors, resistors, and capacitors, the above-mentioned circuit may also be implemented by using a circuit composed of logic gates. Therefore, the above-mentioned implementation is only a relatively simple and low-cost implementation, but it is not limited to the implementation by using the above-mentioned circuit structure. All circuits that can achieve the above actions, controllers with control programs, etc. should be included in the scope of the embodiment.

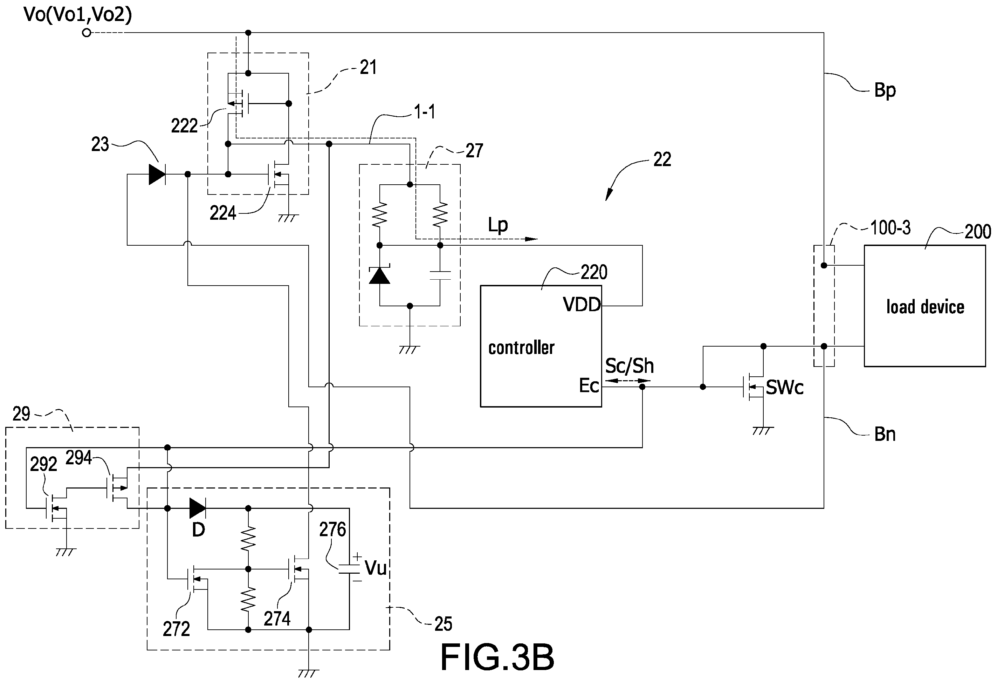

Please refer to FIG. 3B, which shows a block circuit diagram of the path control circuit and the control module according to a first embodiment of the present disclosure, and also refer to FIG. 1 to FIG. 3A. The difference between the path control circuit 20 shown in FIG. 3B and that shown in FIG. 3A is that the trigger component 23 shown in FIG. 3B is a unidirectional conduction component. A first end of the unidirectional conduction component is coupled to the first end Bn, and a second end of the unidirectional conduction component is coupled to the switch circuit 21 and the unlocking circuit 25. In particular, the direction from the first end to the second end of the unidirectional conduction component is forward. The unidirectional conduction component may be, for example, but not limited to, a diode, a thyristor, or other components. The unidirectional conduction component is used for forward biasing when the potential of the first end Bn is the second potential so as to trigger the switch circuit 21 to latch connect (short-circuit) the power supplying path Lp. After the unidirectional conduction component triggers the switch circuit 21 to latch connect the power supplying path Lp, no matter whether the trigger component 23 is turned on or turned off (i.e., before the load device 200 is removed), the switch circuit 21 cannot be triggered again.

In addition, the path control circuit 20 further includes a driving circuit 29. The driving circuit 29 is coupled to the second pin Ec2, the switch circuit 21, the unlocking circuit 25, and the energy storing circuit 27. The driving circuit 29 is used to provide a path voltage V1 at a node between the switch circuit 21 and the energy storing circuit 27 to the unlocking circuit 25 according to the control signal Sc with a high level so as to drive the unlocking circuit 25 to establish the unlocking voltage Vu. In general, since most of the signals provided by the controller 220 are low-power signals, if they are used to push the switching component (i.e., the first unlocking switch 272) and simultaneously charge the capacitor (i.e., the energy storing component 276), it may be prone to failure due to insufficient power. Therefore, the driving circuit 29 can be used to introduce the path voltage V1 to drive the unlocking circuit 25 more easily. In particular, the driving circuit 29 may be, for example, but not limited to, a Darlington circuit composed of a first driving switch 292 and a second driving switch 294. The Darlington circuit and the control signal Sc are used to introduce the path voltage V1 with strong driving capability so that the unlocking circuit 25 can be driven more easily.

In one embodiment, the controller 220 shown in FIG. 3B is another embodiment, which mainly integrates the first pin Ec1 and the second pin Ec2 shown in FIG. 3A into a single pin Ec, and the single pin Ec can integrate the functions of the first pin Ec1 and the second pin Ec2 shown in FIG. 3A. In one embodiment, the implementations of FIG. 3A and FIG. 3B can be interchangeably used, and the energy storing circuit 27 shown in FIG. 3A and FIG. 3B can be optionally selected according to the requirements of the controller 220. Moreover, the circuit structure shown in FIG. 3B is only a schematic example, and therefore as long as circuits, controllers and other devices that can implement the above-mentioned operations, they should be included in the scope of the embodiment.

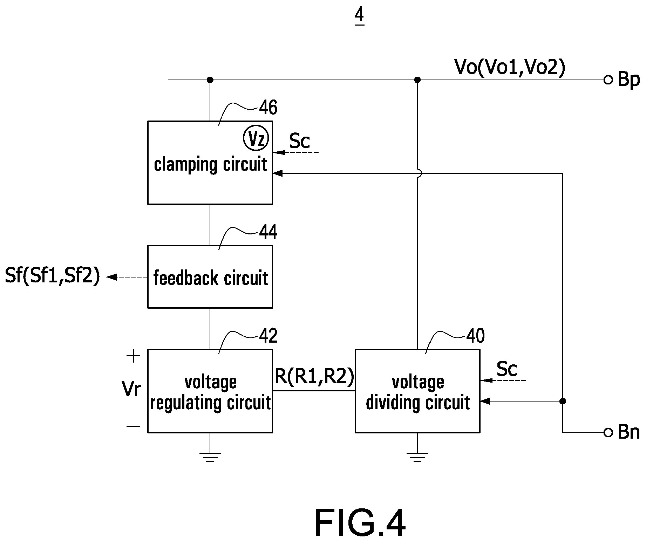

Please refer to FIG. 4, which shows a block circuit diagram of an output control circuit according to the present disclosure, and also refer to FIG. 1 to FIG. 3B. In FIG. 4, the output control circuit 4 includes a voltage dividing circuit 40 and a voltage regulating circuit 42. The voltage dividing circuit 40 is coupled to the first end Bn, and provides an impedance R according to the potential of the first end Bn. The voltage regulating circuit 42 is coupled to the second end Bp and the voltage dividing circuit 40, and adjusts the output voltage Vo according to the impedance R. Specifically, the voltage dividing circuit 40 provides a first impedance R1 (for example, but not limited to, a high impedance) according to that the load device 200 is not coupled to the power supply device 1 and the potential of the first end Bn is in the first potential, and the voltage regulating circuit 42 adjusts the output voltage Vo to the first voltage Vo1 according to the first impedance R1. In addition, the voltage dividing circuit 40 provides a second impedance R2 (for example, but not limited to, a low impedance) according to that the load device 200 is coupled to the power supply device 1, and the voltage regulating circuit 42 adjusts the output voltage Vo to the second voltage Vo2 according to the second impedance R2. In particular, the output control circuit 4 can realize whether the load device 200 is coupled to the power supply device 1 through, for example, but not limited to, a detection signal Ss provided by a detection circuit (not shown), and therefore only the detection signal Ss shown in FIG. 4.

In particular, the output control circuit 4 can directly adjust the voltage of the output terminal 100-3 to the first voltage Vo1 or the second voltage Vo2 through the voltage regulating circuit 42, or the output control circuit 4 may include a feedback circuit 44 to perform a feedback control to adjust the voltage output by the power supply device 1. Specifically, the feedback circuit 44 may be, for example, but not limited to, an optical coupler, and the feedback circuit 44 is coupled to the voltage regulating circuit 42. When the feedback circuit 44 is the optical coupler, the feedback circuit 44 may be coupled in series between the second end Bp and the voltage regulating circuit 42, and a controller (not shown) inside the power supply device 1 can adjust a control signal thereof (such as, but not limited to, a pulse-width modulation signal) by detecting a current flowing through the optocoupler so as to control the power supply device 1 to adjust the output voltage Vo.

Furthermore, the voltage regulating circuit 42 adjusts a feedback signal Sf of the feedback circuit 44 to a first feedback signal Sf1 according to the first impedance R1, and the controller inside the power supply device 1 adjusts the output voltage Vo to the first voltage Vo1 according to the first feedback signal Sf1. Moreover, the voltage regulating circuit 42 adjusts the feedback signal Sf to a second feedback signal Sf2 according to the second impedance R2, and the controller inside the power supply device 1 adjusts the output voltage Vo to the second voltage Vo2 according to the second feedback signal Sf2. On the other hand, the output control circuit 4 further includes a clamping circuit 46. The clamping circuit 46 is mainly used to clamp a voltage between the second end Bp to a ground terminal to prevent the voltage from being too high and exceeding the withstand voltage of the voltage regulating circuit 42. In addition, the clamping circuit 46 also providing a function of adjusting the current flowing through the feedback circuit 44 (i.e., the optical coupler). Specifically, the clamping circuit 46 is coupled to the voltage regulating circuit 42 and the second end Bp, and preferably is connected in series between the second end Bp and the voltage regulating circuit 42. The clamping circuit 46 provides a clamping voltage Vz according to that the load device 200 is coupled to the power supply device 1 so that the voltage between the second end Bp and the ground terminal is equal to the sum of a regulated voltage Vr of the voltage regulating circuit 42 and the clamping voltage Vz.

Therefore, when the output voltage Vo is the second voltage Vo2 and the voltage is relatively high (for example, but not limited to, above 55V), and therefore the voltage regulating circuit 42 may be damaged due to insufficient withstand voltage. Therefore, the clamping circuit 46 can provide the clamping voltage Vz to reduce the voltage drop across the voltage regulating circuit 42 (i.e., the regulated voltage Vr) to prevent the voltage regulating circuit 42 from being damaged due to insufficient withstand voltage. On the contrary, when the output voltage Vo is the first voltage Vo1 (which means that the load device 200 is not coupled to the power supply device 1, and the potential of the first end Bn is in the first potential) and the voltage is relatively low (for example, but not limited to, below 20V), and therefore the voltage regulating circuit 42 is capable of withstanding the first voltage Vo1. Therefore, the clamping circuit 46 may not provide the clamping voltage Vz. On the other hand, whether the clamping voltage Vz is provided or not is related to the change of the current on this path, and therefore the current flowing through the feedback circuit 44 (i.e., the optical coupler) can also be adjusted by providing the clamping voltage Vz so that the controller (not shown) inside the power supply device 1 can adjust the output voltage Vo by detecting the current flowing through the optical coupler.

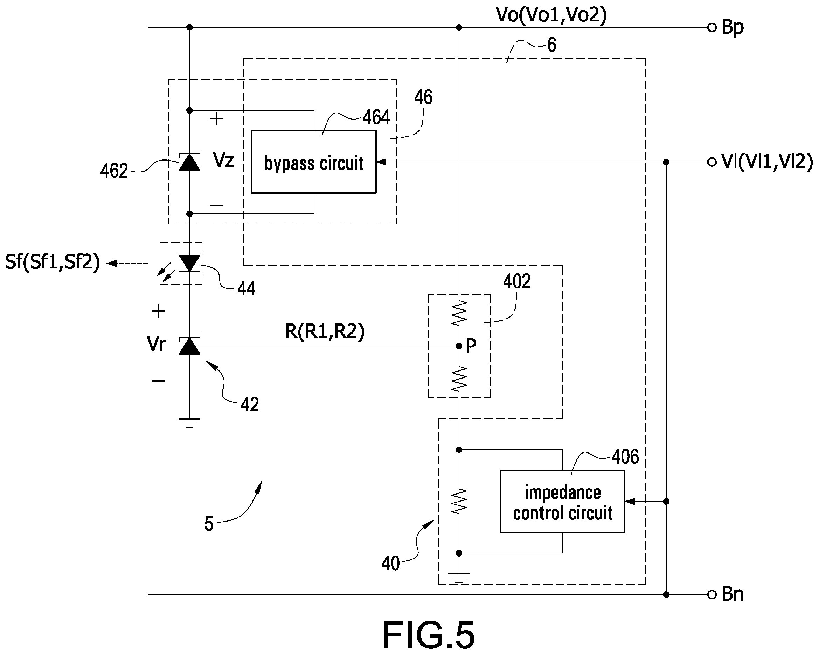

Please refer to FIG. 5, which shows a detailed block circuit diagram of the output control circuit according to the present disclosure, and also refer to FIG. 1 to FIG. 4. In FIG. 5, the voltage dividing circuit 40 includes a first voltage dividing circuit 402, a second voltage dividing circuit 404, and an impedance control circuit 406. The first voltage dividing circuit 402 includes a plurality of resistors Ra, Rb coupled in series, and a node P between the two series-connected resistors Ra, Rb is coupled to the voltage regulating circuit 42. The second voltage dividing circuit 404 is coupled in series to the first voltage dividing circuit 402, i.e., to the series-connected resistors Ra, Rb, and the second voltage dividing circuit 404 may be, for example, but not limited to, a resistor (as shown in FIG. 5) or other components that can provide impedance. The impedance control circuit 406 is coupled in parallel to the second voltage driving circuit 404 and coupled to the first end Bn so that the second voltage dividing circuit 404 is selectively bypassed according to the potential of the first end Bn, and therefore the voltage dividing circuit 40 provides the first impedance R1 or the second impedance R2. Specifically, the second voltage dividing circuit 404 is not bypassed by the impedance control circuit 406 according to that the load device 200 is not coupled to the power supply device 1 and the potential of the first end Bn is in the first potential so that the impedance R of the node P provides the first impedance R1 by voltage division of the resistor Ra, the resistor Rb, and the second voltage dividing circuit 404. On the contrary, the impedance control circuit 406 bypasses the second voltage dividing circuit 404 according to that the load device 200 is coupled to the power supply device 1 so that the impedance R of the node P provides the second impedance R2 by voltage division of the resistor Ra and the resistor Rb.

The voltage regulating circuit 42 may be, for example, but not limited to, a three-terminal voltage regulator (as shown in FIG. 5, which may be, for example, but not limited to, a TL431), and produce voltage change of the node P according to that the impedance R is the first impedance R1 or the second impedance R2. Specifically, when the voltage of the node P changes, the voltage regulating circuit 42 will set the regulated voltage Vr at two terminals of the voltage regulating circuit 42 according to the voltage of the node P. Therefore, the change of the regulated voltage Vr can cause the feedback signal Sf of the feedback circuit 44 (shown as the input terminal of the optical coupler as shown in FIG. 5) to change, thereby allowing the power supply device 1 to adjust the output voltage Vo accordingly.

The clamping circuit 46 includes a clamping component 462 and a bypass circuit 464, and the clamping component 462 may be, for example, but not limited to, a component, such as a Zener diode, that generates a stable fixed voltage according to the voltage magnitude. The clamping component 462 is coupled to the voltage regulating circuit 42 and the second end Bp, and is used to provide the clamping voltage Vz. The bypass circuit 464 is coupled to the first end Bn, and is coupled in parallel to the clamping component 462. The bypass circuit 464 is used to bypass the clamping component 462 and no clamping voltage Vz is provided according to that the load device 200 is not coupled to the first end Bn and the potential of the first end Bn is in the first potential. On the contrary, when the load device 200 is coupled to the power supply device 1, the clamping component 462 is not bypassed by the bypass circuit 464 so that the clamping component 462 can provide the clamping voltage Vz.

On the other hand, whether the load device 200 is coupled to the power supply device 1 can be determined by various detection manners. For example, but not limited to, the Ethernet PSE 100 can realize whether the load device 200 is coupled to the power supply device 1 according to the detection of the controller 220 and the signal provided by the load device 200. Since the present disclosure includes the path control circuit 20, it can be realized whether the load device 200 is coupled to the power supply device 1 according to the short-circuited or open-circuited conditions of the power supplying path Lp. Specifically, the path control circuit 20 is further coupled to the output control circuit 4 so that the Ethernet PSE 100 can determine whether the load device 200 is coupled to the power supply device 1 according to the potential of the first end Bn and the short-circuited or open-circuited conditions of the power supplying path Lp.

Moreover, when the power supplying path Lp is disconnected, a voltage on the path should be a first path voltage V11 (i.e., a low voltage, refer to FIG. 3A and FIG. 3B). On the contrary, when the power supplying path Lp is connected, since the second end Bp is coupled to the power pin VDD, the voltage on the path should be a second path voltage V12 (i.e., a high voltage, refer to FIG. 3A and FIG. 3B). Therefore, when the potential of the first end Bn is in the first potential, and the path control circuit 20 provides the first path voltage V11 to the output control circuit 4, it means that the load device 200 is not coupled to the power supply device 1 so that the voltage dividing circuit 40 provides the first impedance R1 and the clamping circuit 46 does not provide the clamping voltage Vz.

When the potential of the first end Bn is the second potential, it means that the load device 200 has just been connected to or disconnected from the power supply device 1. Furthermore, when the path control circuit 20 provides the second path voltage V12, it means that the power supplying path Lp is short-circuited, and the control module 22 enters the enabled state. Therefore, whatever the condition, the voltage dividing circuit 40 provides the second impedance R2, and the clamping circuit 46 provides the clamping voltage Vz. Since the Ethernet PSE 100 and the load device 200 have completed the handshaking communication, the first end Bn may be the first potential due to grounding, but at this time the power supply device 1 still needs to provide the second voltage Vo2. Therefore, by determining the path voltage V1, it is also possible to avoid incorrectly adjusting the output voltage Vo back to the first voltage Vo1.

Please refer to FIG. 5 again, when the output control circuit 4 includes the feedback circuit 44 to perform the feedback control, the circuits in the output control circuit 4 may be divided into a feedback control circuit 5 belonging to the power supply device 1 and a step-down control circuit 6 belonging to adjusting the output voltage Vo. Specifically, in FIG. 5, the feedback control circuit 5 includes a first voltage dividing circuit 402, a clamping component 462, a feedback circuit 44, and a voltage regulating circuit 42. The step-down control circuit 6 includes a second voltage dividing circuit 404, an impedance control circuit 406, and a bypass circuit 464. The feedback control circuit 5 is mainly used to perform a feedback control when the output voltage Vo is the second voltage Vo2 and normally supplies power to the load device 200 to regulate/stabilize the voltage value of the second voltage Vo2. Moreover, when the load device 200 is disconnected from the Ethernet PSE 100, the step-down control circuit 6 causes the power supply device 1 to steps down the output voltage Vo to the first voltage Vo1 by changing the feedback control mechanism of the feedback control circuit 5. The circuit coupling manner and control manner are as mentioned above and will not be repeated here.

Specifically, when the potential of the first end Bn is in a first potential and the power supplying path Lp is disconnected to provide the first path voltage V11 to the impedance control circuit 406, the impedance control circuit 406 does not bypass the second voltage dividing circuit 404 and provides the first impedance R1 to the voltage regulating circuit 42, and the bypass circuit 464 bypasses the clamping component 462. Therefore, the current flowing through the feedback circuit 44 changes since the impedance R is adjusted to the first impedance R1 so as to notify the power supply device 1 through feedback to adjust (step down) the output voltage Vo to the first voltage Vo1. On the contrary, when the potential of the first end Bn is a second potential, or the power supplying path Lp is short-circuited to provide the second path voltage V12 to the impedance control circuit 406, the impedance control circuit 406 bypasses the second voltage dividing circuit 404 and provides the second impedance R2 to the voltage regulating circuit 42, and the bypass circuit 464 does not bypass the clamping component 462 so that the clamping component 462 provides the clamping voltage Vz. Therefore, the current flowing through the feedback circuit 44 changes since the clamping voltage Vz is adjusted and the impedance R is adjusted to the first impedance R1 so as to notify the power supply device 1 through feedback to adjust (step up) the output voltage Vo to the second voltage Vo2.

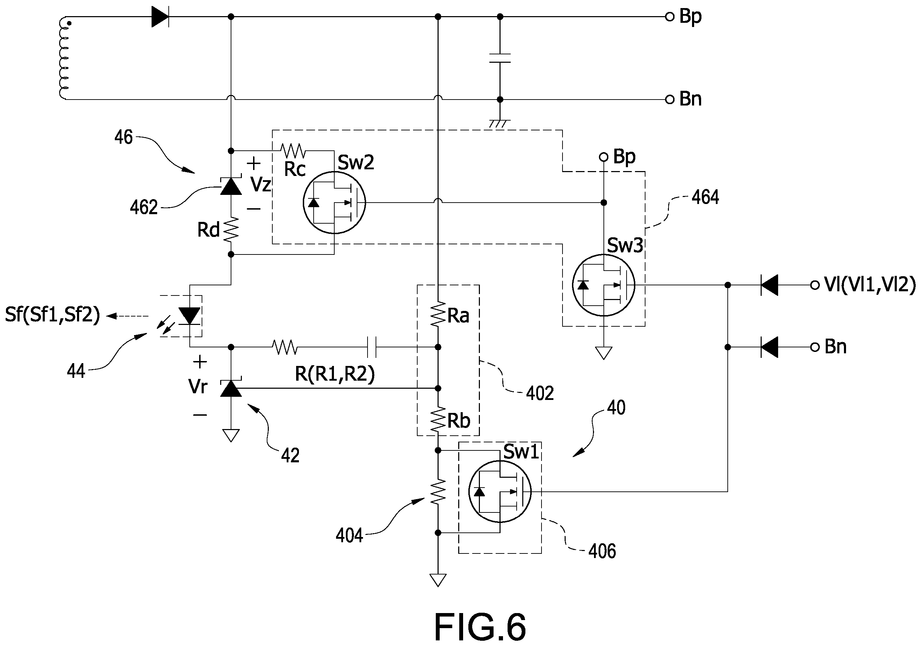

Please refer to FIG. 6, which shows a circuit diagram of the output control circuit according to the present disclosure, and also refer to FIG. 1 to FIG. 5. FIG. 6 shows a circuit structure that can be implemented in the circuit diagram of FIG. 5, but is not limited thereto. Therefore, as long as circuits, controllers, and other devices that can implement the above-mentioned operation methods, they should be included in the scope of the embodiment. In order to avoid obscuring the main features of the disclosure, FIG. 4 only shows the secondaryside winding and other related circuits of the power supply device 1. In addition, the clamping circuit 46 may include resistors Rc, Rd. The resistors Rc, Rd are mainly used to fine-tune the current flowing through the feedback circuit 44 according to whether the bypass circuit 464 performs the bypass function so that it can provide the first voltage Vo1 and the second voltage Vo2 with relatively accurate values. A switch SW1 of the impedance control circuit 406 and switches SW2, SW3 of the bypass circuit 464 are both used for bypass, mainly providing the bypass function when the switch SW1 and the switch SW2 are turned on. In addition, other circuit operation descriptions may be referred to FIG. 5 and will not be described again here.

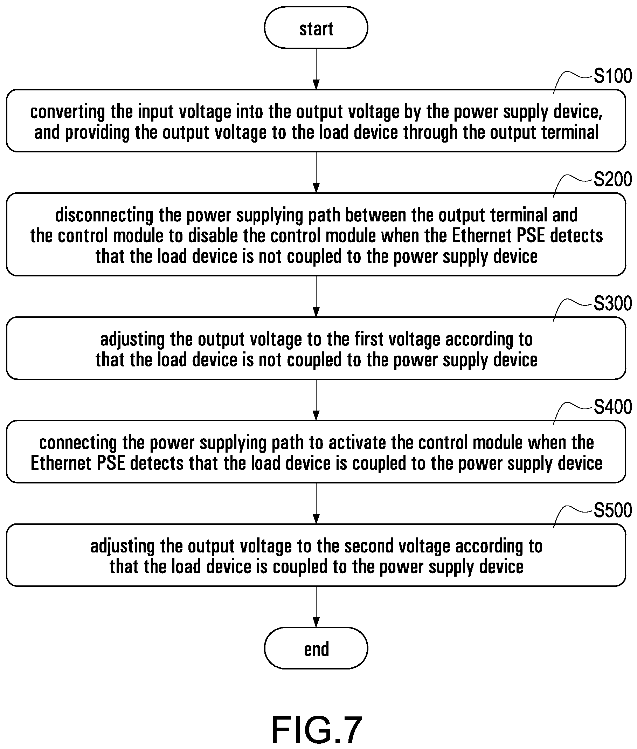

Please refer to FIG. 7, which shows a flowchart of a method of controlling the Ethernet power source equipment according to the present disclosure, and also refer to FIG. 1 to FIG. 6. The control method of the Ethernet PSE 100 is mainly that when the load device 200 is not coupled, the controller 220 enters a disabled state and does not consume power, and the output voltage Vo is stepped down to the first voltage Vo1 so as to save power consumption and comply with energy regulations. Specifically, the method of controlling the Ethernet PSE 100 includes steps of: converting the input voltage into the output voltage by the power supply device, and providing the output voltage to the load device through the output terminal (step S100). Afterward, disconnecting the power supplying path between the output terminal and the control module to disable the control module when the Ethernet PSE detects that the load device is not coupled to the power supply device (step S200). In a preferred implementation, the path control circuit 20 is used to detect the voltage change of the first end Bn to realize whether the load device 200 is coupled to the output terminal 100-3. Moreover, when the load device 200 is not coupled to the output terminal 100-3, the path control circuit 20 disconnects the power supplying path Lp so that the output voltage Vo cannot be provided to the control module 22 through the second end Bp and the power supplying path Lp. Therefore, the control module 22 cannot receive the power required for operation and enters a disabled state (i.e., the control module 22 is disabled).

Afterward, adjusting the output voltage to the first voltage according to that the load device is not coupled to the power supply device (step S300). When the load device 200 is not coupled to the power supply device 1, the output control circuit 4 does not receive the signal provided by the first end Bn or the path control circuit 20. Therefore, the output control circuit 4 adjusts the output voltage Vo to the first voltage Vo1 to reduce the power consumption of the Ethernet PSE 100. Afterward, connecting (short-circuiting) the power supplying path to activate the control module when the Ethernet PSE detects that the load device is coupled to the power supply device (step S400). In a preferred embodiment, the path control circuit 20 short-circuits the power supplying path Lp according to the potential of the second end Bp so that the output voltage Vo can be provided to the controller 220 through the power supplying path Lp, and the controller 220 can receive the power required for operation from the power pin VDD and enter the enabled state (i.e., activating the control module 22).

Afterward, adjusting the output voltage to the second voltage according to that the load device is coupled to the power supply device (step S500). When the load device 200 is coupled to the power supply device 1, since the voltage at the first end Bn is equal to the voltage at the second end Bp, the output control circuit 4 adjusts the output voltage Vo from the first voltage Vo1 to the second voltage Vo2 according to the voltage at the first end Bn. When the control module 22 is activated and the controller 220 of the control module 22 confirms that the load device 200 is a valid load through the handshake signal Sh, the power supply device 1 supplies the power required by the load device 200. On the contrary, if the load device 200 is not a valid load, it means that the load device 200 does not comply with the specific specifications of Power over Ethernet. Therefore, the power supply device 1 can supply default power to the load device 200. In particular, the detailed control manner of the Ethernet PSE 100 may be referred to FIG. 1 to FIG. 6 and will not be described in detail here.

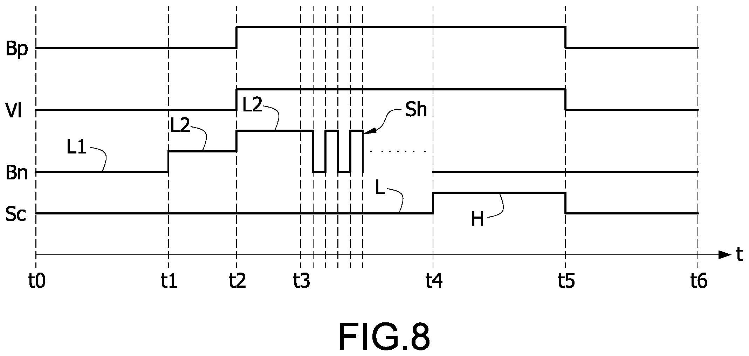

Please refer to FIG. 8, which shows a timing diagram of the method of controlling the Ethernet power source equipment according to the present disclosure, and also refer to FIG. 1 to FIG. 7. During time t0 to time t1, the load device 200 is not coupled to the power supply device 1, and therefore the potential of the first end Bn is in a first potential L1, and the path voltage V1 is the first path voltage V11. In this condition, the controller 220 of the control module 22 enters the disabled state, and therefore the control signal Sc of controlling the switch SWc is at a low level L so that the switch SWc is turned off, and the output voltage Vo at this time is the first voltage Vo1 (for example, but not limited to, 10V). During time t1 to time t2, the load device 200 is coupled to the power supply device 1, and therefore the potential of that first end Bn rises from the first potential L1 to a second potential L2. However, since the path control circuit 20 and the output control circuit 4 have not completed the switching of the internal switches, the power supplying path Lp is still disconnected and the path voltage V1 is still the first path voltage V11. Since the output voltage Vo at this time is still the first voltage Vo1, the second potential L2 is also substantially the first voltage Vo1.

During time t2 to time t3, since the path control circuit 20 and the output control circuit 4 have completed the switching of the internal switches, the power supplying path Lp is short-circuited and the path voltage V1 is the second path voltage V12, and therefore the controller 220 of the control module 22 enters the enabled state. However, since the communication with the load device 200 has not yet been established, the control signal Sc of controlling the switch SWc is still at a low level L and the switch SWc is still turned off. Furthermore, the output control circuit 4 controls the power supply device 1 to adjust the output voltage Vo to the second voltage Vo2 (for example, but not limited to, 56V), and therefore the second potential L2 is also substantially the second voltage Vo2. During time t3 to time t4, since the load device 200 has been coupled to the power supply device 1 and the output voltage Vo has been adjusted to the second voltage Vo2 and normally supplies power to the controller 220, the controller 220 provides the handshake signal Sh through the first end Bn to communicate with the load device 200 for mutual handshake communication. In one embodiment, the handshake signal Sh may be added to the second voltage Vo2 in the form of a carrier to communicate with the load device 200 as shown in FIG. 8, but it is not limited to this. It may communicate with the load device 200 through, for example, but not limited to, additional communication lines.

During time t4 to time t5, the controller 220 has completed communication with the load device 200, and therefore the controller 220 adjusts the control signal Sc of controlling the switch SWc to a high level H to turn on the switch SWc. Therefore, the first end Bn is connected to the ground through the turned-on switch SWc so that the potential of the first end Bn is restored from the second potential L2 to the first potential L1. During time t5 to time t6, the load device 200 is disconnected from the power supply device 1. In this condition, the controller 220 adjusts the control signal Sc of controlling the switch SWc to a low level L, and the power supplying path Lp is disconnected by the path control circuit 20 so that the path voltage V1 provided by the path control circuit 20 changes from the second path voltage V12 to the first path voltage V11, and the controller 220 returns to the disabled state. Moreover, the potential of the first end Bn is maintained at the first potential L1 due to the disconnection of the load device 200. Therefore, the output control circuit 4 controls the power supply device 1 to adjust the output voltage Vo from the second voltage Vo2 to the first voltage Vo1 according to the first path voltage V11 and the first potential L1 of the first end Bn so as to restore the power saving state. In particular, the circuit timing diagrams corresponding to the detailed control manner of the Ethernet PSE 100 may be referred to FIG. 1 to FIG. 6 and will not be described in detail here.

## Claims

1. An Ethernet power source equipment configured to couple to a load device (200), and the Ethernet power source equipment comprising:
a power supply device (1), configured to convert an input voltage (Vin) into an output voltage (Vo), and provide the output voltage (Vo) to the load device (200) through an output terminal (100-3),
an output control circuit (4), coupled to the output terminal (100-3), and configured to adjust the output voltage (Vo) to a first voltage (Vo1) or a second voltage (Vo2) based on whether the load device (200) is coupled to the output terminal (100-3),
a path control circuit (20), coupled to the output terminal (100-3), and
a control module (22), coupled to the path control circuit (20),
wherein when the output control circuit (4) is configured to detect that the load device (200) is not coupled to the output terminal (100-3), the path control circuit (20) is configured to disconnect a power supplying path (Lp) between the output terminal (100-3) and the control module (22), and the output control circuit (4) is configured to adjust the output voltage (Vo) to the first voltage (Vo1) so that the control module (22) enters a disabled state; when the output control circuit (4) is configured to detect that the load device (200) is coupled to the output terminal (100-3), the path control circuit (20) is configured to connect the power supplying path (Lp), and the output control circuit (4) is configured to adjust the output voltage (Vo) to the second voltage (Vo2) so that the control module (22) enters an enabled state.

2. The Ethernet power source equipment as claimed in claim 1, wherein the output control circuit (4) comprises:
a voltage dividing circuit (40), coupled to a first end (Bn) of the output terminal (100-3), and configured to provide an impedance (R) according to a potential of the first end (Bn), and
a voltage regulating circuit (42), coupled to a second end (Bp) of the output terminal (100-3) and the voltage dividing circuit (40), and configured to adjust the output voltage (Vo) according to the impedance (R),
wherein the voltage dividing circuit (40) is configured to provide a first impedance (R1) according to the load device (200) not being coupled to the power supply device (1) and the potential of the first end (Bn) being in a first potential, and the voltage regulating circuit (42) is configured to adjust the output voltage (Vo) to the first voltage (Vo1) according to the first impedance (R1); the voltage dividing circuit (40) is configured to provide a second impedance (R2) according to the load device (200) being coupled to the power supply device (1), and the voltage regulating circuit (42) is configured to adjust the output voltage (Vo) to the second voltage (Vo2) according to the second impedance (R2).

3. The Ethernet power source equipment as claimed in claim 2, wherein the voltage dividing circuit (40) comprises:
a first voltage dividing circuit (402), comprising a plurality of resistors (Ra, Rb) coupled in series, and the voltage regulating circuit (42) coupled to a node (P) formed between two resistors (Ra, Rb),
a second voltage dividing circuit (404), coupled to the plurality of resistors (Ra, Rb) in series, and
an impedance control circuit (406), coupled to the second voltage dividing circuit (404) in parallel, and the impedance control circuit (406) configured to selectively bypass the second voltage dividing circuit (404) so that the voltage dividing circuit (40) is configured to provide the first impedance (R1) or the second impedance (R2),
wherein the impedance control circuit (406) is configured to not bypass the second voltage dividing circuit (404) to provide the first impedance (R1) according to the load device (200) not being coupled to the power supply device (1) and the potential of the first end (Bn) being in the first potential; the impedance control circuit (406) is configured to bypass the second voltage dividing circuit (404) to provide the second impedance (R2) according to the load device (200) being coupled to the power supply device (1).

4. The Ethernet power source equipment as claimed in claim 2, wherein the output control circuit (4) further comprises:
a feedback circuit (44), coupled to the voltage regulating circuit (42),
wherein the voltage regulating circuit (42) is configured to adjust a feedback signal (Sf) of the feedback circuit (44) to a first feedback signal (Sf1) according to the first impedance (R1), and the power supply device (1) is configured to adjust the output voltage (Vo) to the first voltage (Vo1) according to the first feedback signal (Sf1); the voltage regulating circuit (42) is configured to adjust the feedback signal (Sf) to a second feedback signal (Sf2) according to the second impedance (R2), and the power supply device (1) is configured to adjust the output voltage (Vo) to the second voltage (Vo2) according to the second feedback signal (Sf2).

5. The Ethernet power source equipment as claimed in claim 2, wherein the output control circuit (4) further comprises:
a clamping circuit (46), coupled to the voltage regulating circuit (42) and the second end (Bp),
wherein the clamping circuit (46) is configured to provide a clamping voltage (Vz) according to the load device (200) being coupled to the power supply device (1) so that a voltage between the second end (Bp) and a ground terminal is equal to the sum of a regulated voltage (Vr) of the voltage regulating circuit (42) and the clamping voltage (Vz).

6. The Ethernet power source equipment as claimed in claim 5, wherein the clamping circuit (46) comprises:
a clamping component (462), coupled to the voltage regulating circuit (42) and the second end (Bp), and the clamping component (462) configured to provide the clamping voltage (Vz), and
a bypass circuit (464), coupled to the clamping component (462) in parallel,
wherein the bypass circuit (464) is configured to bypass the clamping component (462) and not to provide the clamping voltage (Vz) according to the load device (200) not being coupled to the power supply device (1) and the potential of the first end (Bn) is in the first potential.

7. The Ethernet power source equipment as claimed in claim 2, wherein the path control circuit (20) is further coupled to the output control circuit (4); the voltage dividing circuit (40) is configured to provide the first impedance (R1) when the potential of the first end (Bn) is in the first potential and the path control circuit (20) is configured to provide a first path voltage (Vl1) to the output control circuit (4).

8. The Ethernet power source equipment as claimed in claim 7, wherein the voltage dividing circuit (40) is configured to provide the second impedance (R2) when the potential of the first end (Bn) is a second potential or the path control circuit (20) is configured to provide a second path voltage (V12) to the output control circuit (4).

9. A step-down control circuit (6) applied to an Ethernet power source equipment, the Ethernet power source equipment comprising a power supply device (1) configured to provide an output voltage (Vo) through a first end (Bn) and a second end (Bp), and the power supply device (1) comprising a feedback control circuit (5); the feedback control circuit (5) comprising a clamping component (462) coupled to the second end (Bp) of the power supply device (1) in series, a feedback circuit (44), a voltage regulating circuit (42), and a first voltage dividing circuit (402) coupled to the second end (Bp) and the voltage regulating circuit (42), the step-down control circuit (6) comprising:
a second voltage dividing circuit (404), coupled to the first voltage dividing circuit (402) in series,
an impedance control circuit (406), coupled to the second voltage dividing circuit (404) in parallel and coupled to the first end (Bn), and the impedance control circuit (406) configured to selectively bypass the second voltage dividing circuit (404) to provide a first impedance (R1) or a second impedance (R2) to the voltage regulating circuit (42), and
a bypass circuit (464), coupled to the first end (Bn) and coupled to the clamping component (462) in parallel,
wherein a power pin (VDD) of a controller (220) of the Ethernet power source equipment is coupled to the impedance control circuit (406) and the bypass circuit (464); when a potential of the first end (Bn) is in a first potential, and a power supplying path (Lp) between the second end (Bp) and the power pin (VDD) is disconnected to provide a first path voltage (Vl1) to the impedance control circuit (406), the impedance control circuit (406) is configured not to bypass the second voltage dividing circuit (404) to provide the first impedance (R1) to the voltage regulating circuit (42), and the bypass circuit (464) is configured to bypass the clamping component (462) so that the feedback circuit (44) is configured to notify the power supply device (1) to step down the output voltage (Vo) to a first voltage (Vo1) according to the first impedance (R1).

10. The step-down control circuit (6) as claimed in claim 9, wherein when the potential of the first end (Bn) is in a second potential, or the power supplying path (Lp) is short-circuited to provide a second path voltage (V12) to the impedance control circuit (406), the impedance control circuit (406) is configured to bypass the second voltage dividing circuit (404) to provide the second impedance (R2) to the voltage regulating circuit (42), and the bypass circuit (464) is configured not to bypass the clamping component (462) to provide a clamping voltage (Vz) so that the feedback circuit (44) is configured to notify the power supply device (1) to step up the output voltage (Vo) to a second voltage (Vo2) according to the first impedance (R1) and the clamping voltage (Vz).

11. A method of controlling an Ethernet power source equipment, the Ethernet power source equipment configured to receive an input voltage (Vin) and configured to couple to a load device (200); the Ethernet power source equipment comprising a power supply device (1) and a control module (22), and the method comprising steps of:
converting, by the power supply device (1), the input voltage (Vin) into an output voltage (Vo), and providing the output voltage (Vo) to the load device (200) through an output terminal (100-3),
disconnecting a power supplying path (Lp) between the output terminal (100-3) and the control module (22) to disable the control module (22) when the Ethernet power source equipment detects that the load device (200) is not coupled to the power supply device (1),
adjusting the output voltage (Vo) to a first voltage (Vo1) according to the load device (200) not being coupled to the power supply device (1),
connecting the power supplying path (Lp) to enable the control module (22) when the Ethernet power source equipment detects that the load device (200) is coupled to the power supply device (1), and
adjusting the output voltage (Vo) to a second voltage (Vo2) according to the load device (200) being coupled to the power supply device (1).

12. The method of controlling the Ethernet power source equipment as claimed in claim 11, wherein the output terminal (100-3) comprises a first end (Bn) and a second end (Bp), and the method further comprises steps of:
providing an impedance (R) according to a potential of the first end (Bn),
providing a first impedance (R1) according to the load device (200) not being coupled to the power supply device (1) and the potential of the first end (Bn) is in a first potential,
adjusting the output voltage (Vo) to the first voltage (Vo1) according to the first impedance (R1),
providing a second impedance (R2) according to the load device (200) being coupled to the power supply device (1), and
adjusting the output voltage (Vo) to the second voltage (Vo2) according to the second impedance (R2).

13. The method of controlling the Ethernet power source equipment as claimed in claim 12, wherein the first impedance (R1) and the second impedance (R2) are provided by a first voltage dividing circuit (402) and a second voltage dividing circuit (404), and the method further comprises steps of:
not bypassing the second voltage dividing circuit (404) according to the load device (200) not being coupled to the power supply device (1) and the potential of the first end (Bn) is in the first potential so as to provide the first impedance (R1) formed by the first voltage dividing circuit (402) and the second voltage dividing circuit (404), and
bypassing the second voltage dividing circuit (404) according to the load device (200) being coupled to the power supply device (1) so as to provide the second impedance (R2) formed by the first voltage dividing circuit (402).

14. The method of controlling the Ethernet power source equipment as claimed in claim 13, further comprising steps of:
providing a first feedback signal (Sf1) according to the first impedance (R1),
adjusting, by the power supply device (1), the output voltage (Vo) to the first voltage (Vo1) according to the first feedback signal (Sf1),
adjusting the feedback signal (Sf) to a second feedback signal (Sf2) according to the second impedance (R2), and
adjusting, by the power supply device (1), the output voltage (Vo) to the second voltage (Vo2) according to the second feedback signal (Sf2).

15. The method of controlling the Ethernet power source equipment as claimed in claim 12, further comprising steps of:
providing a clamping voltage (Vz) according to the load device (200) being coupled to the power supply device (1) so that a voltage between the second end (Bp) and a ground terminal is equal to the sum of a regulated voltage (Vr) and the clamping voltage (Vz), and
not providing the clamping voltage (Vz) according to the load device (200) not being coupled to the power supply device (1) and the potential of the first end (Bn) is in the first potential.

16. The method of controlling the Ethernet power source equipment as claimed in claim 12, further comprising steps of:
providing the first impedance (R1) when the potential of the first end (Bn) is in the first potential and the power supplying path (Lp) is disconnected according to a first path voltage (Vl1), and
providing the second impedance (R2) when the potential of the first end (Bn) is in a second potential and the power supplying path (Lp) is short-circuited according to a second path voltage (Vl2).
